# DEMANDE DE BREVET EUROPEEN

(11) **EP 4 841 227 A1**
(43) Date de publication de la demande: **18.11.2026**
(21) Numéro de dépôt: 26177932.6
(22) Date de dépôt: 11.05.2026
(51) Int. Cl.: G01L 1/22, B64D 27/40, G01L 5/00, G01L 5/1627, B64F 5/60

(54) **SYSTÈME DE FIXATION D'UN MOTEUR D'AÉRONEF PRÉSENTANT UNE BIELLE INSTRUMENTÉE**

(30) Priorité: 15.05.2025 FR 2505183
(71) Demandeur: AIRBUS OPERATIONS (S.A.S), 31060 Toulouse (FR)
(72) Inventeur: BERJOT, Michael, 31060 Toulouse (FR); VEERABADRAN, Karounen, 31060 Toulouse (FR); LANSIAUX, Rémi, 31060 Toulouse (FR); JAUFFRET, Laurent, 13725 Marignane Cedex (FR); VIGNES, Jean-Baptiste, 31060 Toulouse (FR)
(74) Mandataire: Cabinet Le Guen Maillet

(57) **Abrégé**

L'invention concerne un système de fixation pour un aéronef et comportant un premier châssis d'un mât de l'aéronef, un deuxième châssis d'un moteur de l'aéronef et au moins une bielle instrumentée (100) comportant une bielle (102) présentant une première extrémité (102a) fixée au premier châssis (14a-b) et une deuxième extrémité (102b) fixée au deuxième châssis (18a-b), où la bielle (102) présente deux barres (106a-b) reliant la première extrémité (102a) et la deuxième extrémité (102b), et au moins une jauge de contrainte (110) fixée sur au moins unes des deux barres (106a-b) où chaque jauge de contrainte (110) est destinée à être connectée à une unité de contrôle (120) de l'aéronef (10).

La bielle instrumentée permet ainsi d'augmenter la sensibilité d'où une meilleure précision dans les résultats.

## Description

### DOMAINE TECHNIQUE

La présente invention concerne un système de fixation pour aéronef comportant une bielle instrumentée fixée entre un châssis d'un mât et un châssis d'un moteur de l'aéronef. La présente invention concerne également un aéronef comportant au moins un tel système de fixation.

### ÉTAT DE LA TECHNIQUE ANTÉRIEURE

La mesure de la poussée d'un moteur d'aéronef est généralement effectuée au sol sur des bancs de mesure dédiés, entre autres, par l'intermédiaire de balances d'efforts. La mesure peut également être effectuée en vol, en fixant des jauges de contrainte sur des pièces d'interfaces structurales massives, ce qui permet une mesure directe.

Ces mesures à l'aide des jauges de contrainte permettent d'obtenir une bonne estimation de la poussée du moteur mais il reste cependant une marge d'erreur sur environ 10% de l'étendue de mesure.

Il est donc souhaitable de trouver un arrangement permettant d'améliorer cette situation.

### EXPOSÉ DE L'INVENTION

Un objet de la présente invention est de proposer un système de fixation qui comporte une bielle qui peut être fixée entre un mât et un moteur de l'aéronef et qui est équipée de jauges de contrainte permettant la mesure des efforts.

À cet effet, est proposé un système de fixation pour un aéronef comportant un premier châssis d'un mât de l'aéronef, un deuxième châssis d'un moteur de l'aéronef et au moins une bielle instrumentée comportant :
- une bielle présentant une première extrémité fixée au premier châssis et une deuxième extrémité fixée au deuxième châssis, où la bielle présente deux barres reliant la première extrémité et la deuxième extrémité, et
- au moins une jauge de contrainte fixée sur au moins unes des deux barres où chaque jauge de contrainte est destinée à être connectée à une unité de contrôle de l'aéronef.

Avec une telle bielle instrumentée, la sensibilité est augmentée d'où une meilleure précision dans les résultats dans le cadre des mesures à bord d'un aéronef.

Avantageusement, chaque barre est de section rectangulaire et présente une jauge de contrainte sur chaque face.

L'invention propose également un aéronef comportant une unité de contrôle, un mât avec un premier châssis, un moteur avec un deuxième châssis et un système de fixation selon l'une des variantes précédentes où chaque jauge de contrainte est connectée à l'unité de contrôle.

### BRÈVE DESCRIPTION DES DESSINS

Les caractéristiques de l'invention mentionnées ci-dessus, ainsi que d'autres, apparaîtront plus clairement à la lecture de la description suivante d'un exemple de réalisation, ladite description étant faite en relation avec les dessins joints :
Fig. 1 est une coupe de côté d'un aéronef comportant au moins un système de fixation selon l'invention entre un mât et un moteur,
Fig. 2 est une vue de face d'un système de fixation selon un premier mode de réalisation de l'invention,
Fig. 3 est une vue en coupe d'un système de fixation selon un deuxième mode de réalisation de l'invention,
Fig. 4 est une vue en perspective d'une bielle instrumentée mise en œuvre dans l'invention, et
Fig. 5 est une représentation schématique d'un exemple d'une architecture matérielle d'une unité de contrôle de la bielle instrumentée selon l'invention.

### EXPOSÉ DÉTAILLÉ DE MODES DE RÉALISATION

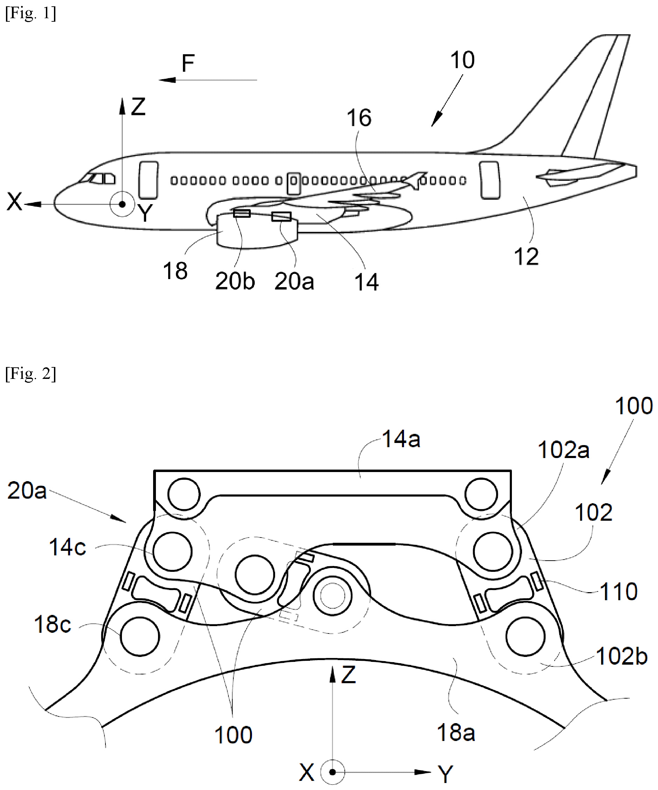

La Fig. 1 montre un aéronef 10 qui comporte un fuselage 12 de chaque côté duquel est fixée une aile 16. Chaque aile 16 supporte au moins un moteur 18 fixé à l'aile 16 par l'intermédiaire d'un mât 14. Le mât 14 présente une structure rigide formant un premier châssis 14a-b et le moteur 18 présente également une structure rigide formant un deuxième châssis 18a-b.

Dans la description qui suit, les termes relatifs à une position sont pris en référence à un aéronef en position normale de vol, c'est-à-dire comme il est représenté sur la Fig. 1 et les positions « avant » et « arrière » sont prises par rapport à l'avant et l'arrière de l'aéronef et par rapport à la direction d'avancement F de l'aéronef 10 lorsque le moteur 18 fonctionne.

Dans la description qui suit, et par convention, on appelle X la direction longitudinale de l'aéronef, on appelle Y la direction transversale qui est horizontale lorsque l'aéronef est au sol, et Z la direction verticale qui est verticale lorsque l'aéronef est au sol, ces trois directions X, Y et Z étant orthogonales entre elles.

Le moteur 18 est fixé au mât 14 à l'avant par un système avant de fixation 20b et à l'arrière par un système arrière de fixation 20a.

Chaque système de fixation 20a-b comporte un premier châssis 14a (à l'arrière) et 14b (à l'avant) du mât 14 et un deuxième châssis 18a (à l'arrière) et 18b (à l'avant).

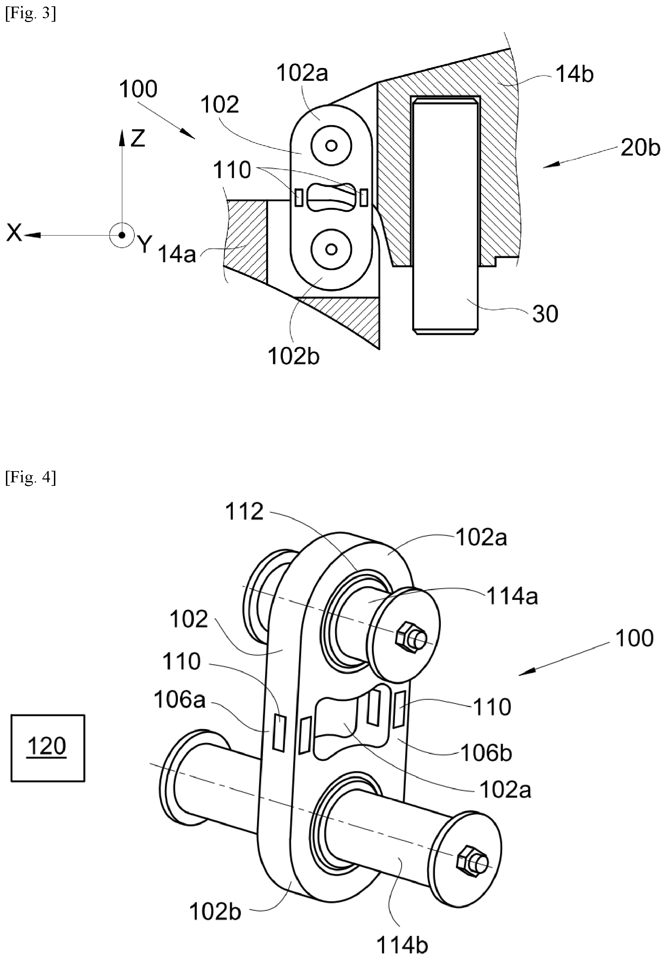

La Fig. 2 montre un exemple de système arrière de fixation 20a et la Fig. 3 montre un exemple de système avant de fixation 20b.

Dans le mode de réalisation représenté à la Fig. 2, le premier châssis 14a prend la forme d'une poutre transversale fixée classiquement en partie inférieure du mât 14 et le deuxième châssis 18a prend la forme d'une couronne (ou une portion de couronne) qui entoure le moteur 18. Dans le mode de réalisation représenté à la Fig. 3, le premier châssis 14b prend la forme d'une partie avant du mât 14 et le deuxième châssis 18b prend la forme d'une partie supérieure du moteur 18. Dans ce mode de réalisation, il est également prévu ici la mise en place d'un axe vertical 30 (dit « spigot ») qui ne sera pas décrit plus en détail ici car il n'entre pas dans le périmètre de l'invention.

La Fig. 4 montre une bielle instrumentée 100 selon l'invention.

Dans chacun des systèmes de fixation 20a-b, au moins une bielle instrumentée 100 est fixée de manière articulée entre le premier châssis 14a-b et le deuxième châssis 18a-b. Dans le système avant de fixation 2a, il y a une seule bielle instrumentée 100 et dans le système arrière de fixation 2b, il y a trois bielles instrumentées 100. Bien sûr, des arrangements différents sont possibles.

La bielle instrumentée 100 comporte une bielle 102 présentant une première extrémité 102a et une deuxième extrémité 102b. La première extrémité 102a est fixée au premier châssis 14a-b du mât 14 et la deuxième extrémité 102b est fixée au deuxième châssis 18a-b du moteur 18. Chaque fixation prend ici la forme d'une liaison pivot ou d'une liaison rotule et prend classiquement la forme d'une liaison par chape.

Au niveau de chaque extrémité 102a-b, il est prévu un alésage 112 traversant la bielle 102 et dans lequel un axe de montage 114a-b est inséré. L'axe de montage 114a-b traverse également des alésages 14c, 18c prévus à cet effet dans le premier châssis 14a et le deuxième châssis 18a. La bielle 102 présente en son milieu, c'est-à-dire entre la première extrémité 102a et la deuxième extrémité 102b, un évidement 102a et la première extrémité 102a et la deuxième extrémité 102b sont alors reliées par deux barres 106a-b qui sont de part et d'autre de l'évidement 102a.

La bielle instrumentée 100 comporte également au moins une jauge de contrainte 110 qui est fixée sur au moins une des deux barres 106a-b et chaque jauge de contrainte 110 est connectée à une unité de contrôle 120 de l'aéronef 10. L'unité de contrôle 120 est en particulier prévue pour enregistrer les valeurs relevées par chaque jauge de contrainte 110. L'unité de contrôle 120 peut être une unité d'acquisition à distance RAU (remote acquisition unit).

À partir de ces valeurs, l'unité de contrôle 120 peut calculer les valeurs de la poussée du moteur à partir de formules pré-enregistrées qui ne sont pas décrites ici car elles ne font pas partie de l'invention.

Avec de telles bielles instrumentées 100, les mesures se font au plus près du moteur 18 et la forme particulière de la bielle 102 permet d'augmenter la sensibilité d'où une meilleure précision dans les résultats.

Selon un mode de réalisation particulier, chaque barre 106a-b présente une section rectangulaire et une jauge de contrainte 110 sur chaque face. Il y a ainsi quatre jauges de contrainte 110 par barre 106a-b pour une redondance des mesures.

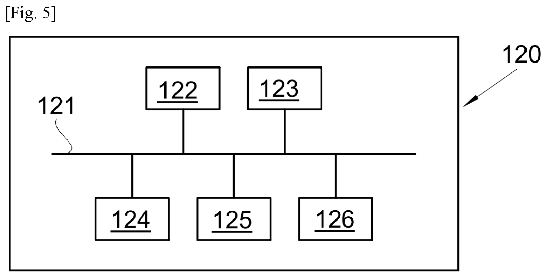

Selon un mode de réalisation particulier représenté à la Fig. 5, l'unité de contrôle 120 comporte, reliés par un bus de communication 121 : un processeur 122 ou CPU (« Central Processing Unit » en anglais) ; une mémoire vive RAM 123 (« Random Access Memory » en anglais) ; une mémoire morte ROM 124 ou Flash (« Read Only Memory » en anglais) ; une unité de stockage 125 telle qu'un disque dur ou un lecteur de support de stockage, tel qu'un lecteur de cartes SD (« Secure Digital » en anglais) ; au moins une interface de communication 126 , permettant par exemple à l'unité de contrôle de communiquer avec les jauges de contrainte.

Le processeur est capable d'exécuter des instructions chargées dans la RAM à la mise sous tension à partir de la ROM ou de la Flash, d'une mémoire externe (non représentée), d'un support de stockage (tel qu'une carte SD), ou d'un réseau de communication. Lorsque l'équipement est mis sous tension, le processeur est capable de lire de la RAM des instructions et de les exécuter. Ces instructions forment un programme d'ordinateur causant la mise en œuvre, par le processeur, de tout ou partie des algorithmes et étapes décrits ci-dessus.

Tout ou partie des algorithmes et étapes décrits ci-dessus peut être implémenté sous forme logicielle par exécution d'un ensemble d'instructions par une machine programmable, par exemple un DSP (« Digital Signal Processor » en anglais) ou un microcontrôleur, ou être implémenté sous forme matérielle par une machine ou un composant dédié, par exemple un FPGA (« Field-Programmable Gate Array » en anglais) ou un ASIC (« Application-Specific Integrated Circuit » en anglais).

## Revendications

1. Système de fixation (20a-b) pour un aéronef (10) et comportant un premier châssis (14a-b) d'un mât (14) de l'aéronef (10), un deuxième châssis (18a-b) d'un moteur (18) de l'aéronef (10) et au moins une bielle instrumentée (100) comportant :
- une bielle (102) présentant une première extrémité (102a) fixée au premier châssis (14a-b) et une deuxième extrémité (102b) fixée au deuxième châssis (18a-b), où la bielle (102) présente deux barres (106a-b) reliant la première extrémité (102a) et la deuxième extrémité (102b), et
- au moins une jauge de contrainte (110) fixée sur au moins unes des deux barres (106a-b) où chaque jauge de contrainte (110) est destinée à être connectée à une unité de contrôle (120) de l'aéronef (10).

2. Système de fixation (20a-b) selon la revendication 1, **caractérisé en ce que** chaque barre (106a-b) est de section rectangulaire et présente une jauge de contrainte (110) sur chaque face.

3. Aéronef (10) comportant une unité de contrôle (120), un mât (14) avec un premier châssis (14a-b), un moteur (18) avec un deuxième châssis (18a-b) et un système de fixation (20a-b) selon l'une des revendications 1 ou 2 où chaque jauge de contrainte (110) est connectée à l'unité de contrôle (120).
